# EUROPÄISCHE PATENTANMELDUNG

(11) **EP 2 792 533 A2**
(43) Veröffentlichungstag der Anmeldung: **22.10.2014**
(21) Anmeldenummer: 14163563.1
(22) Anmeldetag: 04.04.2014
(51) Int. Cl.: B60L 5/02, B60L 5/20, H02G 7/16

(54) **Beheizbarer Stromabnehmer zum Herstellen von elektrischem Kontakt zwischen einer stromführenden Leitung und einem Elektrofahrzeug, sowie Heizeinrichtung zur Verwendung in diesem Stromabnehmer**

(30) Priorität: 16.04.2013 DE 202013101624 U
(71) Anmelder: Thermo Heating Elements GmbH, 85296 Rohrbach (DE)
(72) Erfinder: Uchtmann, Paul, Greer, SC South Carolina 29650 (US)
(74) Vertreter: Winter, Brandl, Fürniss, Hübner, Röss, Kaiser, Polte - Partnerschaft mbB

(57) **Zusammenfassung**

Offenbart ist ein beheizbarer Stromabnehmer (2) zum Herstellen eines elektrischen Kontakts zwischen einer stromführenden Leitung (4) und einem Elektrofahrzeug (6), mit wenigstens einer im Wesentlichen quer zur stromführenden Leitung (4) angeordneten Schleifkontaktschiene (10), die wenigstens eine Bohrung (14) aufweist, in der jeweils ein elektrisch betriebenes, längliches Heizelement (18) angeordnet ist, das nur einen Teil des Querschnitts der Bohrung (14) ausfüllt. Erfindungsgemäß ist das Heizelement (18) mit einer Spanneinrichtung (20) verbunden, die das Heizelement (18) an eine Innenseite der Bohrung (14) andrückt.

Offenbart ist ferner eine Heizeinrichtung (12) für den beheizbaren Stromabnehmer (2), mit einem im Wesentlichen starren stabförmigen Heizelement (18) mit einem elektrischen Widerstandsheizleiter (36) und zwei freien Enden (30, 32). Erfindungsgemäß umfasst die Heizeinrichtung einen eigenstabilen, elastischen und thermostabilen Schlauch (22), der an einem Ende (24) abgedichtet ist, wobei das abgedichtete Ende (28) des Schlauches (26) mit einem (30) der freien Enden des Heizelements (18) fest verbunden ist.

## Beschreibung

Die vorliegende Erfindung bezieht sich auf einen beheizbaren Stromabnehmer zum Herstellen von elektrischem Kontakt zwischen einer stromführenden Leitung und einem Elektrofahrzeug gemäß dem Oberbegriff der Ansprüche 1 und 10 sowie Heizeinrichtung zur Verwendung in diesem Stromabnehmer gemäß dem Oberbegriff des Anspruchs 6.

Stromabnehmer von Elektrofahrzeugen, wie etwa elektrische betriebene Lokomotiven oder Straßenbahnen, sowie stromführende Leitungen, wie etwa eine Bahnoberleitung zur Versorgung von Elektrofahrzeugen mit elektrischem Strom zum Betrieb desselben sind Witterungseinflüssen ausgesetzt, so dass sich insbesondere auf dem Stromabnehmer oder auf der stromführenden Leitung eine Reif- oder Eisschicht ausbilden und den elektrischen Kontakt zwischen dem Stromabnehmer und der Leitung beeinträchtigen oder gar unterbinden kann.

Zur Enteisung von Freiluftdrahtleitungen sind Einrichtungen bekannt, in denen die Drähte geschlagen, einer lang andauernden, ununterbrochenen Vibration ausgesetzt oder durch Kurzschluss einzelner Streckenabschnitte erwärmt werden. Nachteilig bei den nach dem Schlag- oder Vibrierverfahren arbeitenden Einrichtungen ist, dass die Lebensdauer der Leitungen verkürzt wird. Nachteilig bei den mit Erwärmung arbeitenden Einrichtungen ist, dass diese sehr leistungsfähig sein müssen, und der Betrieb von Elektrofahrzeugen während des Kurzschlusses der Streckenabschnitt unterbrochen werden muss. DE 2 324 387 offenbart eine Enteisungseinrichtung zur Enteisung der Oberflächen von Freileitungsdrähten, die von einem auf einem Dach eines Elektrofahrzeugs angeordneten Hebemechanismus getragen wird und Mittel, insbesondere einen Induktor, zum Erzeugen von in Zeitintervallen aufeinenden Impulsen eines elektromagnetischen Feldes umfasst. Die Mittel sind in unmittelbarer Nähe der zu einteisenden Oberfläche angeordnet und bewirken eine elastische Verformung derselben, so dass eine Eisschicht abplatzt. Nachteilig bei dieser Enteisungseinrichtung ist, dass sie nur eine Eisschicht, eine Reifschicht jedoch nicht effektiv entfernt.

Aus dem deutschen Gebrauchsmuster DE 7 029 001 ist ein Stromabnehmer für einen Kran bekannt, der an einer Stromschiene entlang verfahrbar ist und einen an der Stromschiene anliegenden Schleifkörper zum Herstellen eines elektrischen Kontakts mit der Stromschiene hat. Der Schleifkörper hat Bohrungen, die in einer Richtung senkrecht zu der Stromschiene ausgebildet sind und in die jeweils eine Heizpatrone einsetzbar ist. Beim Auftreten einer Reif- oder Eisschicht auf der Stromschiene wird die Heizpatrone mit elektrischem Strom versorgt, heizt sich auf und erwärmt dabei den Schleifkörper und die Stromschiene in einem Abschnitt in der Nähe der Wärmekontaktstelle zwischen dem Schleifkörper und der Stromschiene. Nachteilig bei dieser Lösung ist, dass der Durchmesser der Bohrung so groß gewählt werden muss, dass die Heizpatrone in einem beheizten und infolgedessen thermisch ausgedehnten Zustand darin Platz finden kann, und dass die Heizpatrone, wenn sie in einem dazu kälteren Zustand ist, nur noch in einem begrenzten Bereich in einer Auflagefläche der Heizpatrone in der Bohrung einen Kontakt mit der Innenoberfläche der Bohrung und keinen für eine optimale Wärmeübertragung von der Heizpatrone auf die Innenoberfläche der Bohrung wünschenswert größeren, idealerweise vollflächigen Kontakt über die Außenoberfläche der Heizpatrone aufweist. Nachteilig ist auch, dass die Heizeinrichtung in einem kälteren Zustand nicht fest mit der Innenoberfläche verbunden ist und aufgrund des Luftspalts zwischen der Oberfläche der Heizpatrone und der Innenoberfläche einen schlechten Wärmekontakt mit der Innenoberfläche der Bohrung hat. Nachteilig ist ferner, dass sich die eingesetzte Heizpatrone im kälteren Zustand in der Bohrung verdrehen und/oder axial verschieben kann.

Demgegenüber liegt der vorliegenden Erfindung die Aufgabe zu Grunde, einen beheizbaren Stromabnehmer mit einer Bohrung zur Aufnahme einer Heizeinrichtung und eine in die Bohrung einsetzbare Heizeinrichtung zu schaffen, wobei die Heizeinrichtung einfach in die Bohrung einsetzbar und nach dem Einsetzen in der Bohrung fixierbar ist.

Gemäß einem ersten Aspekt wird diese Aufgabe gelöst durch einen beheizbaren Stromabnehmer mit den Merkmalen des Anspruchs 1. Gemäß einem zweiten Aspekt wird diese Aufgabe gelöst durch eine Heizeinrichtung mit den Merkmalen des Anspruchs 6. Vorteilhafte Weiterbildungen sind in den Unteransprüchen beschrieben.

Gemäß dem ersten Aspekt schafft die Erfindung einen beheizbaren Stromabnehmer zum Herstellen eines elektrischen Kontakts zwischen einer stromführenden Leitung und einem Elektrofahrzeug. Der Stromabnehmer umfasst wenigstens eine im Wesentlichen quer zur stromführenden Leitung angeordnete Schleifkontaktschiene und einen Hebemechanismus, an dem die wenigstens eine Schleifkontaktschiene montiert ist. Die wenigstens eine Schleifkontaktschiene hat wenigstens eine Bohrung, in der jeweils ein elektrisch betriebenes, längliches Heizelement angeordnet ist, das nur einen Teil des Querschnitts der Bohrung ausfüllt.

Erfindungsgemäß ist das Heizelement mit einer Spanneinrichtung verbunden, die das Heizelement an eine Innenseite der Bohrung andrückt. Durch die Spanneinrichtung wird das Heizelement in der Bohrung fixiert, und durch das Andrücken desselben an die Innenseite der Bohrung wird die Wärmeübertragung vom Heizelement zur Innenseite der Bohrung verbessert.

Die Spanneinrichtung kann ein eigenstabiler, elastischer und thermostabiler Schlauch sein. Durch seine Eigenstabilität ist auch der Schlauch einfach in die Bohrung einführbar. Durch seine Elastizität nimmt der Schlauch Formveränderungen (Ausdehnen und Zusammenziehen) des Heizelements, die infolge von Temperaturänderungen auftreten, auf und gewährleistet das Andrücken des Heizelements an die Innenseite der Bohrung sowie die verbesserte Wärmeübertragung vom Heizelement zur Innenseite der Bohrung auch bei unterschiedlichen Formen des Heizelements bzw. bei unterschiedlichen Temperaturen. Durch seine Thermostabilität ist der Schlauch auch bei hohen Temperaturen, wie sie im Heizbetrieb des Heizelements auftreten, einsetzbar und ermöglicht die vorgenannte Funktionalität.

Das Heizelement kann als im Wesentlichen starrer Stab ausgebildet sein und zwei freie Enden aufweisen. Durch seine Ausbildung als starrer Stab kann das Heizelement einfach in die Bohrung eingeführt und daraus entfernt werden, wenn dies etwa für eine Auswechselung des Heizelements erforderlich ist.

Der eigenstabile elastische Schlauch kann entlang des stabförmigen Heizelements angeordnet sein und der Schlauch kann wenigstens mit einem freien Ende des Heizelements fest verbunden sein. Durch diese Ausgestaltung kann der Schlauch in einfacher Weise zusammen mit dem Heizelement in einem Arbeitsgang in die Bohrung der Schleifkontaktschiene eingeführt und daraus entfernt werden.

Der Schlauch kann an einem Ende abgedichtet sein, und dieses abgedichtete Ende des Schlauchs kann mit einem der freien Enden des stabförmigen Heizelements verbunden sein. Durch diese Ausgestaltung kann das Innenvolumen des Schlauchs von seinem anderen freien Ende her evakuiert werden, so dass sich der Außendurchmesser des Schlauchs während der Evakuierung verringert. Durch die feste Verbindung des abgedichteten Endes mit dem einen der freien Enden des Heizelements kann der Schlauch im evakuierten Zustand zusammen mit dem Heizelement besonders leicht in die Bohrung eingeführt, z.B. eingeschoben, und daraus entfernt, z.B. herausgezogen, werden.

Die Bohrung in der Schleifkontaktschiene kann so dicht unter der der Leitung zuwendbaren Oberfläche der Schleifkontaktschiene ausgeführt sein, dass ein in Umfangsrichtung begrenzter Abschnitt der Bohrung in der der Leitung zuwendbaren Oberfläche einen Schlitz ausgebildet ist. In dieser Ausgestaltung kann der Schlitz eine Schlitzbreite haben, wobei die Schlitzbreite kleiner als der Durchmesser des Heizelements gewählt ist, so dass das Heizelement sicher in der Bohrung gehalten wird. Dabei kann die Spanneinrichtung in der Bohrung an der dem Schlitz gegenüberliegenden Seite des Heizelements angeordnet sein und das Heizelement in Richtung des Schlitzes drücken. Dabei kann ein Teilabschnitt eines am Schlitz bloßliegenden Abschnitts des Heizelements aus dem Schlitz nach außen auskragen, so dass der aus dem Schlitz auskragende Teilabschnitt in direktem Kontakt mit der stromführenden Leitung sein kann.

Alternativ dazu kann die Bohrung in der Schleifkontaktschiene kann so weit unter der der Leitung zuwendbaren Oberfläche der Schleifkontaktschiene ausgeführt sein, dass die Bohrung vollständig innerhalb der Schleifkontaktschiene, vorzugsweise jedoch in der Nähe der der Leitung zuwendbaren Oberfläche der Schleifkontaktschiene angeordnet ist.

Gemäß dem zweiten Aspekt schafft die Erfindung eine Heizeinrichtung für einen beheizbaren Stromabnehmer gemäß dem ersten Aspekt. Die Heizeinrichtung umfasst ein im Wesentlichen starres, stabförmiges Heizelement mit einem elektrischen Widerstandsheizleiter und zwei freien Enden.

Erfindungsgemäß umfasst das Heizelement ferner einen eigenstabilen, elastischen und thermostabilen Schlauch, der an einem Ende abgedichtet ist, wobei das abgedichtete Ende des Schlauches mit einem der freien Enden des Heizelements fest verbunden ist. Wie bereits erwähnt, ist der Schlauch durch seine Eigenstabilität einfach in die Bohrung einführbar. Durch seine Elastizität nimmt der Schlauch Formveränderungen (Ausdehnen und Zusammenziehen) des Heizelements, die infolge von Temperaturänderungen auftreten, auf und gewährleistet das Andrücken des Heizelements an die Innenseite der Bohrung sowie die verbesserte Wärmeübertragung vom Heizelement zur Innenseite der Bohrung auch bei unterschiedlichen Formen des Heizelements bzw. bei unterschiedlichen Temperaturen. Durch seine Thermostabilität ist der Schlauch auch bei hohen Temperaturen, wie sie im Heizbetrieb des Heizelements auftreten, einsetzbar und ermöglicht die vorgenannte Funktionalität. Durch die Abdichtung des Schlauchs an einem freien Ende kann das Innenvolumen des Schlauchs von seinem anderen freien Ende her evakuiert werden, so dass sich der Außendurchmesser des Schlauchs während der Evakuierung verringert. Durch die feste Verbindung des abgedichteten Endes mit dem einen der freien Enden des Heizelements kann der Schlauch im evakuierten Zustand zusammen mit dem Heizelement besonders leicht in die Bohrung eingeführt und daraus entfernt werden.

Das Heizelement kann einen Stab mit einem Außengewinde umfassen, und der elektrische Widerstandsheizleiter kann in den Rillen des Außengewindes eingelegt sein. Durch das Einlegen des Widerstandsheizleiters in die Rillen des Außengewindes sind die Windungen des Widerstandsheizleiters positionsstabil relativ zu dem Stab mit diesem verbunden. Aufgrund seines helixförmigen Verlauf hat das Außengewinde eine sehr viel größere Länge als der Stab, sodass ein Widerstandsheizleiter mit relativ zur Länge des Stabs viel größerer Länge und entsprechend größerer Heizleistung in dem Heizelement untergebracht ist. Der Stab kann ein Teflonstab, d.h. aus Teflon hergestellt, sein. Dadurch ist der Stab thermostabil und das Außengewinde kann in dem relativ weichen Material (Teflon) leicht ausgebildet werden.

Die Außenseite des Stabes kann mit dem elektrischen Widerstandsheizleiter mit einer elektrisch isolierenden und wärmedurchlässigen Schicht versehen bzw. umhüllt sein. Dabei kann die Schicht als ein Außenmantel des Heizelements ausgeführt sein. Durch ihre elektrisch isolierende Eigenschaft verleiht die Schicht dem Heizelement nach außen eine elektrische Isolierung. Die elektrische Isolierung ermöglicht einerseits einen Schutz einer Montageperson beim Einbau der Heizeinrichtung in einer Bohrung einer Schleifkontaktschiene, und darüber hinaus eine elektrische Entkopplung der in der Bohrung eingebauten Heizeinrichtung von dem im Betrieb eines Stromabnehmers in der Schleifkontaktschiene fließenden elektrischen Strom.

Die elektrisch isolierende und wärmedurchlässige Schicht kann wenigstens einen Schrumpfschlauch umfassen. In der Ausbildung als Schrumpfschlauch kann die schlauchförmige Schicht in einem aufgeweiteten Zustand einfach über den Stab gezogen und anschließend geschrumpft werden, wobei sie sich fest mit dem nun von der Schicht umhüllten Stab verbindet bzw. an diesem anlegt.

Die elektrisch isolierende und wärmedurchlässige Schicht kann ferner mindestens eine aus PTFE hergestellte Schicht zur elektrischen Isolierung gegenüber Hochspannung umfassen.

An den beiden freien Enden des Heizelements ist der Widerstandsheizleiter jeweils mit einer elektrischen Zuleitung, d.h. einer elektrischen Leitung zur Stromzuführung, verbunden. Die Zuleitung umfasst einen Hochspannungsdraht zum Zuführen eines Heizstroms zu dem Heizelement und eine Isolierungsschicht, die ausreichend gegen die hohe Spannung und den hohen Strom aus der stromführenden Leitung isoliert. Mittels derartiger Zuleitungen können mehrere Heizelemente bzw. Heizeinrichtungen elektrisch hintereinander verbunden (in Reihe geschaltet) werden. Die elektrisch hintereinander verbundenen Heizelemente bzw. Heizeinrichtungen können in einer Bohrung axial hintereinander angeordnet sein, und/oder in zwei oder mehreren parallel zueinander ausgeführten Bohrungen angeordnet sein.

An den beiden freien Enden kann das Heizelement zum Schutz gegenüber Umwelt- und Witterungseinflüssen abgedichtet sein, beispielsweise mittels Abdichtungen aus Silikon.

Das Heizelement kann ferner ein sich in dessen Längsrichtung erstreckendes Verstärkungselement, beispielsweise eine Zugentlastungeinrichtung, umfassen. Das Verstärkungselement dient dazu, auf das Heizelement einwirkende mechanische Spannungen, insbesondere Zugspannungen, aufzunehmen. Das Verstärkungselement kann innerhalb der Schicht oder radial innerhalb der Schicht, z.B. von der Schicht zusammen mit dem Stab umhüllt, angeordnet sein. Die Zuleitungen können ebenfalls geeignete zweite Verstärkungselemente (Zugentlastungselemente) aufweisen. Auch um einen Abschnitt, wo ein Ende einer Zuleitung mit einem Ende des Widerstandheizleiters elektrisch leitend verbunden ist, kann eine Zugentlastungseinrichtung vorgesehen sein.

Der Schlauch der Spannvorrichtung kann ein Silikonschlauch sein, der sich durch Einbringen von Vakuum radial zusammenzieht und abflacht, sodass die Heizeinrichtung, d.h. das Heizelement zusammen mit der Spannvorrichtung (dem Schlauch), leicht in eine Bohrung in der Schleifkontaktschiene eingeführt werden kann. Wenn nach dem Einführen das Vakuum aufgehoben wird, dehnt dieser Schlauch sich aus und drückt das Heizelement an die dem Schlauch gegenüberliegende Innenseite der Bohrung. Auf diese Weise in der Bohrung an dem Schlauch elastisch gelagert, kann das Heizelement die Erschütterungen und Vibrationen der Schleifkontaktschiene im Betrieb sicher überstehen. Ferner kann die Heizeinrichtung aus der Bohrung leicht wieder entfernt werden, etwa wenn im Rahmen einer Wartung ein Austausch gegen eine neue Heizeinrichtung durchgeführt werden soll.

Nicht zuletzt aufgrund der helixförmigen Anordnung des Widerstandheizleiters in den Rillen des Außengewindes des Stabes erreicht der stabförmige Aufbau des Heizelements eine maximalisierte Heizoberfläche, was wiederum einen Betrieb mit niedrigeren Heiztemperaturen und längerer Lebensdauer ermöglicht.

Selbstverständlich sind die in der Heizeinrichtung verbauten Materialien robust und widerstandsfähig bezüglich der zu erwartenden Betriebstemperaturen, auch bei länger andauernder, kontinuierlicher Nutzung.

Gemäß dem dritten Aspekt schafft die Erfindung einen beheizbaren Stromabnehmer zum Herstellen eines elektrischen Kontakts zwischen einer stromführenden Leitung und einem Elektrofahrzeug. Der Stromabnehmer umfasst wenigstens eine im Wesentlichen quer zur stromführenden Leitung angeordnete Schleifkontaktschiene und einen Hebemechanismus, an dem die wenigstens eine Schleifkontaktschiene montiert ist. Die wenigstens eine Schleifkontaktschiene weist wenigstens eine Bohrung auf, in der jeweils eine elektrisch betriebene Heizeinrichtung angeordnet ist, die nur einen Teil des Querschnitts der Bohrung ausfüllt. Erfindungsgemäß umfasst der Stromabnehmer eine vorstehend beschriebene Heizeinrichtung gemäß der zweiten Aspekt der Erfindung.

Im folgenden werden Ausführungsbeispiele eines erfindungsgemäßen Stromabnehmers und einer erfindungsgemäßen Heizeinrichtung anhand beigefügter schematischer Zeichnungen näher erläutert. Es zeigen:
Figur 1 ein erstes Ausführungsbeispiel eines erfindungsgemäßen Stromabnehmers in Kontakt mit einer stromführenden Leitung in einer Seitenansicht,
Figur 2 ein zweites Ausführungsbeispiel eines erfindungsgemäßen Stromabnehmers in Kontakt mit einer stromführenden Leitung in einer perspektivischen Ansicht,
Figur 3 als Detail zu der Figur 2 eine Schleifkontaktschiene des Stromabnehmers in Kontakt mit einer stromführenden Leitung in einem Querschnitt senkrecht zur Längserstreckung der Schleifkontaktschiene,
Figur 4 in analoger Darstellung zu der Figur 3 ein anderes Ausführungsbeispiel einer Schleifkontaktschiene,
Figur 5 als Detail zu den Figuren 1 bis 4 eine Anordnung einer Heizeinrichtung in einer Bohrung einer Schleifkontaktschiene in einem Querschnitt senkrecht zur Längserstreckung der Schleifkontaktschiene,
Figur 6 in analoger Darstellung wie Figur 5 eine modifizierte Anordnung einer Heizeinrichtung in einer Bohrung einer Schleifkontaktschiene,
Figur 7 eine Schleifkontaktschiene eines dritten Ausführungsbeispiels eines Stromabnehmers in Kontakt mit zwei stromführenden Leitungen in einem Querschnitt entlang der Längserstreckung der Schleifkontaktschiene,
Figur 8 ein Ausführungsbeispiel einer erfindungsgemäßen Heizeinrichtung in einer Aufsicht vor dem Einbau in einen Stromabnehmer,
Figur 9 ein Detail der Heizeinrichtung aus der Figur 8 an einem freien Ende derselben in einem Querschnitt entlang der Längsachse des Heizelements und des Schlauchs, und
Figur 10 ein anderes Detail der Heizeinrichtung aus der Figur 8 an dem anderen freien Ende derselben in einem Querschnitt entlang der Längsachse des Heizelements und des Schlauchs.

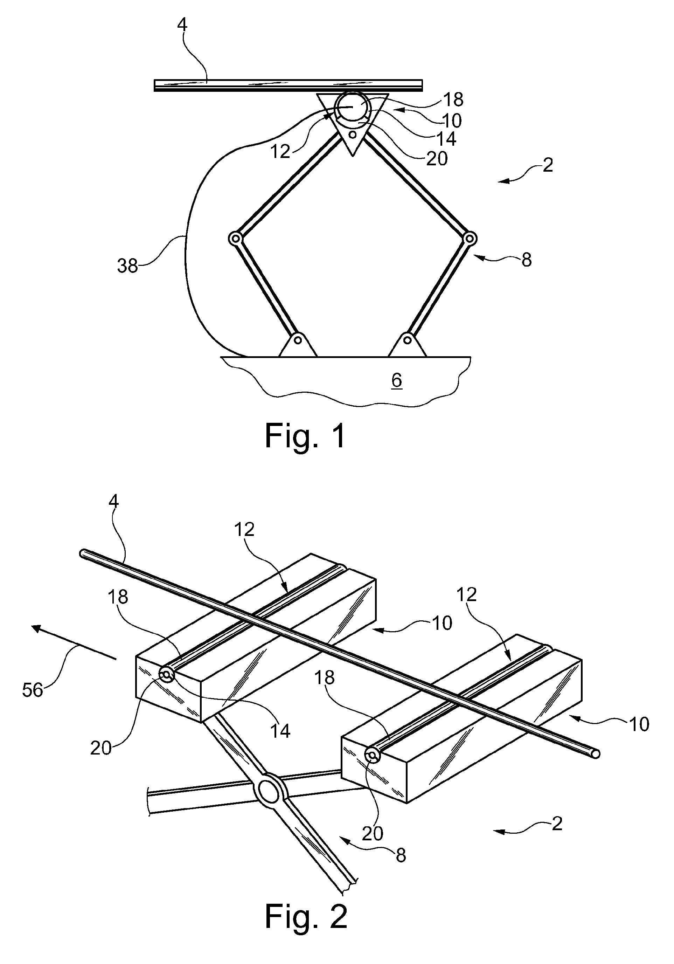

Wie in der Figur 1 gezeigt, ist ein beheizbarer Stromabnehmer 2 gemäß einem ersten Ausführungsbeispiel zum Herstellen eines elektrischen Kontakts zwischen einer stromführenden Leitung 4 und einem Elektrofahrzeug 6 auf einer Oberseite, z.B. einem Dach des Elektrofahrzeugs 6 angeordnet. Der Stromabnehmer 2 umfasst eine im Wesentlichen quer zur stromführenden Leitung 4 angeordnete Schleifkontaktschiene 10 und einen Hebemechanismus 8, an dem die wenigstens eine Schleifkontaktschiene 10 montiert ist. Der Hebemechanismus 8 ist mittels Halteeinrichtungen (nicht bezeichnet) auf der Oberseite des Elektrofahrzeugs 6 befestigt und umfasst scharnierbar miteinander verbundene Trageschenkel (nicht bezeichnet), von denen untere scharnierbar mit den Halteeinrichtungen und obere scharnierbar mit der Schleifkontaktschiene 10 verbunden sind. Eine Oberseite der Schleifkontaktschiene 10 liegt an der Leitung 4 an, sodass ein elektrischer Kontakt zwischen der Schleifkontaktschiene 10 und der Leitung 4 hergestellt ist. Über einen an der Schleifkontaktschiene 10 angeschlossenen, d.h. elektrisch verbundenen, Starkstromleiter (nicht gezeigt) wird aus der Leitung 4 in die Schleifkontaktschiene 10 abfließender elektrischer Strom von der Schleifkontaktschiene 10 zum Betrieb des Elektrofahrzeug 6 abgeführt.

In der Schleifkontaktschiene 10 ist eine Bohrung 14 ausgebildet, die sich in Richtung einer Längserstreckung der Schleifkontaktschiene 10 erstreckt. In der Bohrung 14 ist eine Heizeinrichtung 12 angeordnet. Die Heizeinrichtung 12 umfasst ein elektrisch betriebenes, längliches Heizelement 18, das nur einen Teil des Querschnitts der Bohrung 14 ausfüllt, und eine Spanneinrichtung 20, mit der das Heizelement 18 verbunden ist und die das Heizelement 18 an eine Innenseite der Bohrung 14 andrückt. Über eine aus dem Elektrofahrzeug 6 herausgeführte erste Zuleitung 38 wird der Heizeinrichtung elektrischer Strom (Heizstrom) zugeführt und über eine zweite Zuleitung (nicht gezeigt) in das Elektrofahrzeug 6 zurück. In dem Elektrofahrzeug 6 ist eine Schalt- und Steuereinrichtung (nicht gezeigt) zum An- und Ausschalten und zum Steuern der Stärke des der Heizeinrichtung 12 zugeführten Heizstroms angeordnet.

Wenn sich witterungsbedingt auf der Schleifkontaktschiene 10 eine Eis- oder Reifschicht gebildet hat, wird der Heizstrom eingeschaltet, so dass die Heizeinrichtung 12 die Schleifkontaktschiene 10 aufheizt und die Eis- oder Reifschicht zum Schmelzen bringt. Wenn im Betrieb des Elektrofahrzeug 6 die Witterungsbedingungen so sind, dass die Möglichkeit besteht, dass sich eine Eis- oder Reifschicht auf der Schleifkontaktschiene 10 ausbildet, wird der Heizstrom eingeschaltet, so dass die Heizeinrichtung 12 die Schleifkontaktschiene 10 aufheizt und das Ausbilden einer Eisoder Reifschicht auf der aufgeheizten Schleifkontaktschiene 10 vermieden wird. Durch den Kontakt der Schleifkontaktschiene 10 mit der Leitung 4 kann sich von der Heizeinrichtung 12 erzeugte Wärmeenergie auch in die Leitung 4 hinein ausbreiten und dazu beitragen, zu bewirken, dass eine etwaig auf der Leitung 4 gebildete Eis- oder Reifschicht entfernt wird.

Wie in der Figur 2 gezeigt, umfasst ein beheizbarer Stromabnehmer 2 gemäß einem zweiten Ausführungsbeispiel zwei in einer Fahrrichtung 56 des Elektrofahrzeugs (in der Figur 2 nicht gezeigt) hintereinander angeordnete Schleifkontaktschienen 10. In jeder Schleifkontaktschiene 10 ist eine Bohrung 14 ausgebildet, die sich in Richtung der Längserstreckung der Schleifkontaktschiene 10 erstreckt. In jeder Bohrung 14 ist eine Heizeinrichtung 12 in analoger Weise und mit analoger Wirkung angeordnet, wie die Heizeinrichtung 12 in der Figur 1 in der Bohrung 14 der Schleifkontaktschiene 10 in der Figur 1 angeordnet ist. Die Hintereinanderanordnung von zwei mit einer Heizeinrichtung 12 bestückten Schleifkontaktschienen 10 in der Fahrrichtung 56 des Elektrofahrzeugs bewirkt zusätzlich, dass die Heizeinrichtung in der in Fahrrichtung 58 vorderen Schleifkontaktschiene 10 die Leitung 4 (vor)erwärmen und die Heizeinrichtung in der in Fahrrichtung 58 hinteren Schleifkontaktschiene 10 die Leitung 4 weiter erwärmen kann, so dass als Gesamtwirkung eine etwaige auf der Leitung 4 vorhandene Eis- oder Reifschicht noch besser entfernt werden kann.

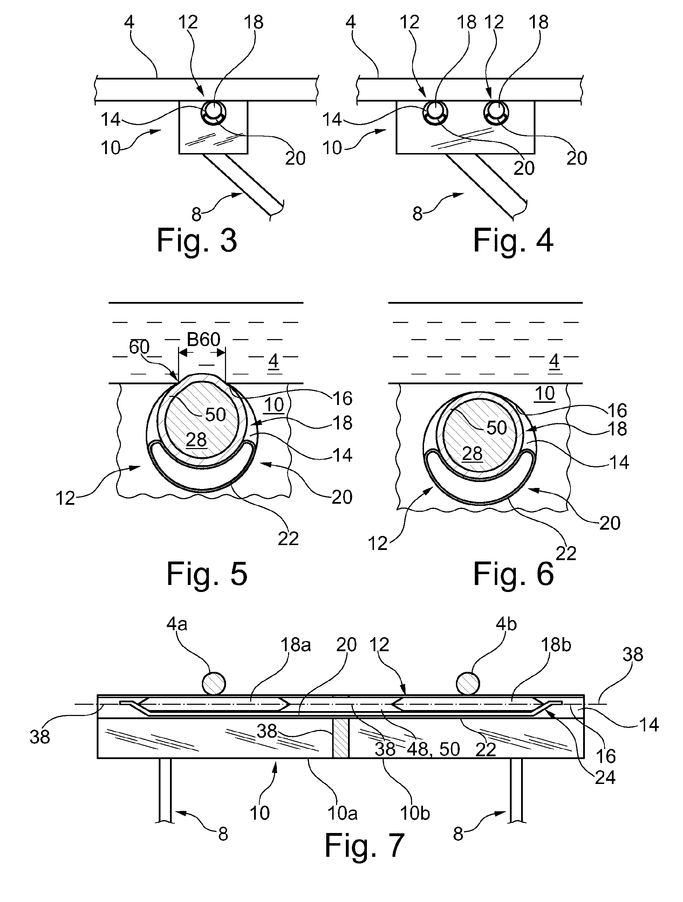

Die Figur 3 zeigt als Detail zu der Figur 2 einen Querschnitt durch eine Schleifkontaktschiene 10 des Stromabnehmers gemäß des zweiten Ausführungsbeispiels, senkrecht zur Längserstreckung der Schleifkontaktschiene 10. Man erkennt die in der Schleifkontaktschiene 10 ausgebildete Bohrung 14 mit dem in der Oberfläche der Schleifkontaktschiene 10 gebildeten Schlitz sowie die in der Bohrung 14 eingebrachte Heizeinrichtung 12 und deren Anordnung in Bezug auf den Schlitz und die Innenoberfläche der Bohrung 14.

Figur 4 zeigt in zu der Figur 3 analoger Darstellung ein anderes Ausführungsbeispiel einer Schleifkontaktschiene 10, in der zwei Bohrungen 14 wie oben beschrieben ausgeführt sind. In jeder der beiden Bohrungen 14 ist eine Heizeinrichtung 12 angeordnet, wie dies oben beschrieben ist. Es können in analoger Weise noch weitere Bohrungen 14 mit darin eingebrachten Heizeinrichtungen 12 vorgesehen sein. Das Bereitstellen von zwei oder mehr Heizeinrichtungen 12 in einer Schleifkontaktschiene 10 bewirkt eine Verdoppelung oder Vervielfachung der in die Schleifkontaktschiene 10 einbringen Heizleistung und damit eine Verbesserung der Eisoder Reifschicht beseitigenden Wirkung.

Wie in den Figuren 1 bis 7 und besonders gut in der Figur 5 erkennbar, ist in den in den Figuren 1 bis 4 gezeigten Ausführungsformen die Bohrung 14 in der Schleifkontaktschiene 10 so dicht unter der der Leitung 4 zu zuwendbaren (in den Figuren 1 bis 5 oberen) Oberfläche der jeweiligen Schleifkontaktschiene 10 ausgeführt, dass ein in der Umfangsrichtung der Bohrung 14 begrenzter Abschnitt der Bohrung 14 bezüglich der der Leitung 4 zuwendbaren Oberfläche der Schleifkontaktschiene 10 nach außen offen ist und in der Leitung 4 zuwendbaren Oberfläche der Schleifkontaktschiene 10 ein Schlitz 60 mit der Schlitzbreite B60 ausgebildet ist. Die Spanneinrichtung 20 ist in der Bohrung 14 an der dem Schlitz 60 gegenüberliegenden Seite des Heizelements 18 angeordnet und drückt das Heizelement 18 in Richtung des Schlitzes 60. Die Breite B60 des Schlitzes 60 ist kleiner als der Durchmesser des Heizelements 18, so dass das Heizelement 18 sicher in der Bohrung 14 gehalten wird. Ein in der Umfangsrichtung des Heizelements 18 begrenzter Abschnitt der Manteloberfläche des Heizelements 18 liegt an bzw. in dem Schlitz 60 bloß. Der dazu komplementäre Teil der Manteloberfläche des Heizelements 18 liegt innerhalb der Bohrung 14. Dem Spannelement 20 gegenüberliegend angeordnete Teilbereiche der Manteloberfläche des Heizelements 18 sind, insbesondere an beiden Längsseiten des Schlitzes 60, an der Innenseite 16 der Bohrung 14 angedrückt und bewirken durch diesen direkten Andrückkontakt mit der Innenseite 16 der Bohrung 14 eine gute Wärmeübertragung von dem Heizelement 18 in die Schleifkontaktschiene 10 bzw. in das Material derselben. Des Weiteren kragt ein Teilabschnitt des am Schlitz 60 bloßliegenden Abschnitts des Heizelements 18 aus dem Schlitz 60 nach außen. Dieser aus dem Schlitz 60 nach außen kragende Teilabschnitt des Heizelements 18 kann in direktem Kontakt mit der Leitung 4 sein, sodass auch eine gute Wärmeübertragung von dem Heizelement 18 zu der Leitung 4 bewirkt ist.

Alternativ zu der in der Figur 5 gezeigten Anordnung der Bohrung 14 und der Heizeinrichtung 12 in der Bohrung 14 kann in einer in der Figur 6 gezeigten alternativen Anordnung die Bohrung 14 in der Schleifkontaktschiene 10 so weit unter der der Leitung 4 zuwendbaren Oberfläche der Schleifkontaktschiene 10 ausgeführt sein, dass die Bohrung 14 vollständig innerhalb der Schleifkontaktschiene 10, vorzugsweise jedoch in der Nähe der der Leitung 10 zuwendbaren Oberfläche der Schleifkontaktschiene 10 angeordnet ist. Die in der Figur 6 gezeigte alternative Anordnung kann ohne Weiteres in den in den Figuren 1 bis 4 und 7 gezeigten Ausführungsbeispielen anstelle der in der Figur 5 gezeigten Anordnung realisiert sein.

In dem in der Figur 7 gezeigten dritten Ausführungsbeispiel ist die stromführende Leitung als Doppelleitung ausgeführt und umfasst zwei im Wesentlichen parallel zueinander angeordnete stromführende Leitungen 4a und 4b. Dementsprechend ist die Schleifkontaktschiene 10 in ihrer Längsrichtung, d.h. in der Rechtung quer zu den Leitungen 4a und 4b, mittels eines in Längsrichtung im Wesentlichen in der Mitte der Schleifkontaktschiene 10 angeordneten Isolierungselement 58 in zwei elektrisch voneinander isolierte Teilabschnitte 10a und 10b unterteilt. Der Teilabschnitt 10a dient zum Herstellen von elektrischem Kontakt mit der einen Leitung 4a der Doppelleitung und der Teilabschnitt 10b zum Herstellen von elektrischem Kontakt mit der anderen Leitung 4b der Doppelleitung. Die Bohrung 14 verläuft in der Längsrichtung der Schleifkontaktschiene 10 und erstreckt sich durch den ersten Teilabschnitt 10a, das Isolierungselement 58 und den zweiten Teilabschnitt 10b. Die in der Bohrung 14 angeordnete Heizeinrichtung 12 umfasst ein erstes Heizelement 18a und ein zweites Heizelement 18b. Das erste Heizelement 18a ist in dem ersten Teilabschnitt 10a der Schleifkontaktschiene 10 angeordnet und dient zum Aufheizen dieses Teilabschnitts 10a und gegebenenfalls zum Aufheizen eines Abschnitts der ersten Leitung 4a der Doppelleitung. Das zweite Heizelement 18b ist in dem zweiten Teilabschnitt 10b der Schleifkontaktschiene 10 angeordnet und dient zum Aufheizen dieses Teilabschnitts 10b und gegebenenfalls zum Aufheizen eines Abschnitts der zweiten Leitung 4b der Doppelleitung. Das erste und das zweite Heizelement 18a und 18b sind mittels Abschnitten einer elektrischen Zuleitung 38 hintereinander (d.h. in Reihe) geschaltet. Die beide Heizelemente 18a und 18b sind hintereinander angeordnet und von einer gemeinsamen, in Längsrichtung durchgängigen, d.h. sich über beide Heizelemente 18a und 18b erstreckenden, als Schrumpfschlauch 50 ausgeführten, elektrisch isolierenden und wärmedurchlässigen Schicht 48 umgeben. Die Spanneinrichtung 20 ist als eigenstabiler, elastischer und thermostabiler Schlauch 22 ausgebildet und erstreckt sich Längsrichtung entlang der beiden Heizelemente 18a und 18b. Auf diese Weise drückt die Spanneinrichtung 20 beide Heizelemente 18 und 18b an der Innenseite 16 der Bohrung 14 an. An einem (dem in der Figur 7 rechten) Ende ist der Schlauch 22 abgedichtet und an dem äußeren freien Ende des zweiten Heizelements 18b fest verbunden.

Selbstverständlich können die in der Figur 7 gezeigten Ausgestaltungen der Schleifkontaktschiene 10 mit beiden in Längsrichtung hintereinander angeordneten Teilabschnitten 10a und 10b und der Heizeinrichtung 12 mit den beiden elektrisch hintereinander geschalteten Heizelementen 18a und 18b zum Herstellen von elektrischem Kontakt mit zwei stromführenden Leitungen 4a und 4b einer Doppelleitung auch auf die in den Figuren 1 bis 4 gezeigten Ausführungsbeispiele übertragen werden, um diese so umzugestalten, dass der Stromabnehmer 2 dazu geeignet ist, elektrische Kontakt mit einer Doppelleitung herzustellen.

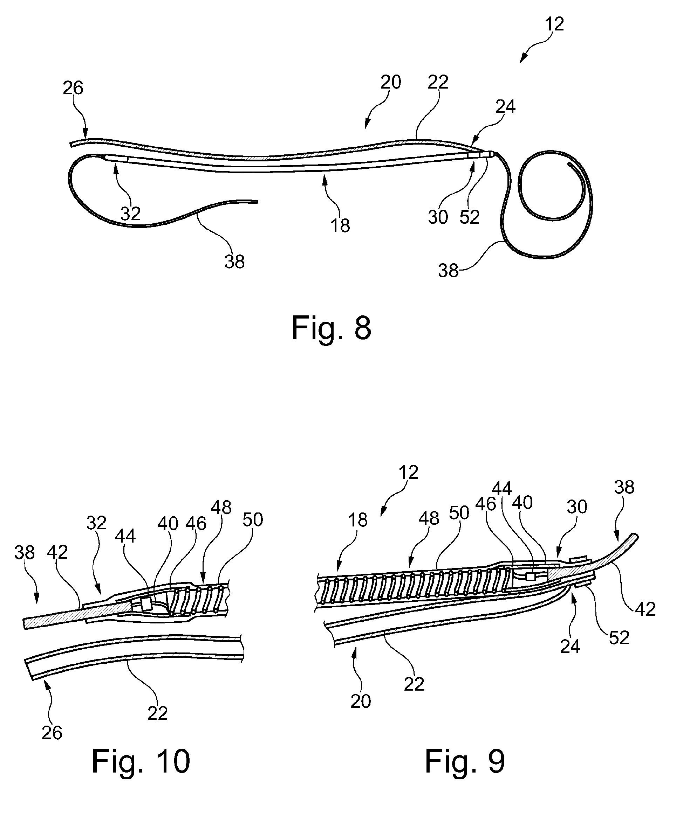

Die Figuren 8 bis 10 zeigen ein Ausführungsbeispiel einer zum Einbau fertig vormontierten, erfindungsgemäßen Heizeinrichtung 12 vor dem Einbau in eine Schleifkontaktschiene 10 eines Stromabnehmers 2. Wie in der Figur 8 gezeigt, umfasst die Heizeinrichtung 12 ein im Wesentlichen starres stabförmiges Heizelement 18 mit einem elektrischen Widerstandsheizleiter 36. Das Heizelement 18 hat zwei freie Enden 30 und 32, an denen jeweils eine Zuleitung 38 (Stromzuleitung) elektrisch verbunden ist. Die Heizeinrichtung 12 umfasst ferner einen eigenstabilen, elastischen und thermostabilen Schlauch 22. Der Schlauch 22 ist an einem Ende 24 abgedichtet. Das abgedichtete Ende 24 des Schlauches 22 ist mit dem freien Ende 30 des Heizelements 18 fest verbunden. Zum Herstellen dieser Verbindung sind das abgedichtete Ende 24 des Schlauches 22 und das freie Ende 30 des Heizelements 18 gemeinsam mittels eines Wickelelements 54, wie etwa einem Klebeband, umwickelt.

Wie in den Figuren 9 und 10 gezeigt, umfasst das Heizelement 18 einen Stab 28 mit einem Außengewinde 34. Der elektrische Widerstandsheizleiter 36 in den Rillen dieses Außengewindes 34 eingelegt. Mit Vorteil ist der Stab 28 aus Teflon gefertigt. Die Außenseite des Stabes 28 mit dem elektrischen Widerstandsheizleiter 36 ist von einer elektrisch isolierenden und wärmedurchlässigen Schicht 48 umhüllt. Die Schicht 48 dient zur elektrischen Isolierung und zum Schutz des in den Rillen des Außengewindes des Stabs 28 eingelegten Widerstandsheizleiters 36. Insbesondere umfasst diese Schicht 48 wenigstens einen außen angeordneten Schrumpfschlauch 50. Die Schicht 48, zumindest jedoch der Schrumpfschlauch 50 erstreckt sich über die freien Enden 30 und 32 des Heizelements 18 hinaus und umhüllt dort jeweils Längsabschnitte (Verbindungsabschnitte), in denen die Enden des Widerstandsheizleiters 36 mit jeweiligen elektrischen Zuleitungen 38 elektrisch leitend verbunden sind. Eine jeweilige Zuleitung 38 besteht in bekannter Weise aus einem inneren, elektrisch leitenden Kerndraht 40 und einer den Kerndraht 40 umhüllenden Isolierungsschicht 44. Diese Verbindungsabschnitte sind jeweils in einer Schutzhülse 46 angeordnet, die zum Stützen und zur elektrischen Isolierung des Verbindungsabschnitts dient.

Zum Verbinden eines jeweiligen Endes einer Zuleitung 38 mit einem Ende des Widerstandsheizleiters 36 wird ein Längsabschnitt der Isolierungsschicht 44 entfernt, so dass der Kerndraht 40 bloß gelegt ist. Sodann wird der bloßgelegte Kerndraht 40 mittels eines Anschlusselements 44, das etwa eine Lüsterklemme und/oder eine Sicherung umfasst, mit dem Ende des Widerstandsheizleiters 36 elektrisch leitend verbunden. Über die so an beiden freien Enden 30 und 32 des Heizelements 18 gebildeten Verbindungsabschnitte ist jeweils eine Schutzhülse 46 geschoben. Nach dem Herstellen der Verbindungen (Anschlüsse) der beiden Enden des Widerstandsheizleiters 36 wird die Schicht 48 über den Verbindungsabschnitt am einen freien Ende 30, über den Stab 28 mit dem in den Rillen des Außengewindes desselben eingelegten Widerstandsheizleiters 36, und über den Verbindungsabschnitt am anderen freien Ende 32 des Heizelements 18 aufgebracht. Danach wird ein Schrumpfschlauch 50 im seinem aufgeweiteten Zustand über den Verbindungsabschnitt am einen freien Ende 30, den Stab 28 und den Verbindungsabschnitt am anderen freien Ende 32 des Heizelements 18 gezogen und geschrumpft. Abschließend wird an dem einen freien Ende 30 des Heizelements, in einem Abschnitt, in dem die Schicht 48 bzw. der Schrumpfschlauch 50 die Isolierungsschicht 42 der Zuleitung 38 umhüllt, das abgedichtete Ende 24 des Schlauchs 22 befestigt, etwa in dem ein Wickelelement 54, wie etwa ein Klebeband, um das abgedichtete Ende 24 des Schlauchs 22 zusammen mit dem vorgenannten Abschnitt herum gewickelt wird.

Zum Einbau der so vormontierten Heizeinrichtung 12 in eine vorgefertigte Schleifkontaktschiene 10 eines Stromabnehmers 2 wird zunächst in der Längsrichtung der Schleifkontaktschiene 10 die Bohrung 14, in der die Heizeinrichtung 12 aufgenommen werden soll, als Durchloch ausgeführt, falls gewünscht in der bezüglich der Figur 5 beschriebenen Ausführung, in der ein Schlitz 60 in der im Betrieb der stromführenden Leitung 4 zuwendbaren Oberfläche der Schleifkontaktschiene 10 entsteht. Dann wird der Schlauch 22 von seinem offenen, dem abgedichteten ersten Ende 24 gegenüberliegenden zweiten Ende aus evakuiert, d.h. die im Innenraum des Schlauchs 22 enthaltene Luft wird ausgepumpt und ein Unterdruck erzeugt. Dann wird die Heizeinrichtung 12 mit der Zuleitung 38, die an dem freien Ende 30, an dem das abgedichtete Ende 24 des Schlauchs 22 befestigt ist, voran in die Bohrung 14 hineingeschoben, bis das die Zuleitung 38 und das freie Ende am entgegengesetzten Ende der Bohrung 14 (des Durchlochs) heraustritt. Falls erforderlich, wird die Heizeinrichtung 12 in der Bohrung 14 um ihre die Längsachse gedreht, bis das Heizelement 18 an der gewünschten Innenseite 16 der Bohrung 14, gegebenenfalls an dem Schlitz 60 anliegt. Dann wird die Evakuierung des Innenraums des Schlauchs 22 aufgehoben bzw. beendet, so dass der Schlauch 22 sich aufgrund seiner Elastizität ausdehnt und das Heizelement 18 gegen die Innenseite 16 der Bohrung 14 andrückt und ggf. teilweise durch den Schlitz 60 hindurch drückt, wie in der Figur 5 gezeigt.

Offenbart ist ein beheizbarer Stromabnehmer zum Herstellen eines elektrischen Kontakts zwischen einer stromführenden Leitung und einem Elektrofahrzeug, mit wenigstens einer im Wesentlichen quer zur stromführenden Leitung angeordneten Schleifkontaktschiene, die wenigstens eine Bohrung aufweist, in der jeweils ein elektrisch betriebenes, längliches Heizelement angeordnet ist, das nur einen Teil des Querschnitts der Bohrung ausfüllt. Das Heizelement ist mit einer Spanneinrichtung verbunden, die das Heizelement an eine Innenseite der Bohrung andrückt.

Offenbart ist ferner eine Heizeinrichtung für den beheizbaren Stromabnehmer, mit einem im Wesentlichen starren stabförmigen Heizelement mit einem elektrischen Widerstandsheizleiter und zwei freien Enden. Die Heizeinrichtung umfasst einen eigenstabilen, elastischen und thermostabilen Schlauch, der an einem Ende abgedichtet ist, wobei das abgedichtete Ende des Schlauches mit einem der freien Enden des Heizelements fest verbunden ist.

### Bezugszeichenliste

- 2: Stromabnehmer
- 4: Leitung
- 4a: Leitung einer Doppelleitung
- 4b: Leitung einer Doppelleitung
- 6: Elektrofahrzeug
- 8: Hebemechanismus
- 10: Schleifkontaktschiene
- 10a: Teilabschnitt
- 10b: Teilabschnitt
- 12: Heizeinrichtung
- 14: Bohrung
- 16: Innenseite
- 18: Heizelement
- 20: Spanneinrichtung
- 22: Schlauch
- 24: erstes Ende
- 26: zweites Ende
- 28: Stab
- 30: freies Ende
- 32: freies Ende
- 34: Außengewinde
- 36: Widerstandsheizleiter
- 38: Zuleitung
- 40: Kerndraht
- 42: Isolierungsschicht
- 44: Anschlusselement
- 46: Schutzhülse
- 48: Schicht
- 50: Schrumpfschlauch
- 52: Verbindungsmittel
- 54: Wickelelement
- 56: Fahrrichtung
- 58: Isolierungselement
- 60: Schlitz
- B60: Schlitzbreite

## Patentansprüche

1. Beheizbarer Stromabnehmer (2) zum Herstellen eines elektrischen Kontakts zwischen einer stromführenden Leitung (4) und einem Elektrofahrzeug (6), mit wenigstens einer im Wesentlichen quer zur stromführenden Leitung (4) angeordneten Schleifkontaktschiene (10), und
einem Hebemechanismus (8), an dem die wenigstens eine Schleifkontaktschiene (10) montiert ist,
wobei die wenigstens eine Schleifkontaktschiene (10) wenigstens eine Bohrung (14) aufweist, in der jeweils ein elektrisch betriebenes, längliches Heizelement (18) angeordnet ist, das nur einen Teil des Querschnitts der Bohrung (14) ausfüllt, **dadurch gekennzeichnet, dass** das Heizelement (18) mit einer Spanneinrichtung (20) verbunden ist, die das Heizelement (18) an eine Innenseite (16) der Bohrung (14) andrückt.

2. Stromabnehmer nach Anspruch 1, **dadurch gekennzeichnet, dass** die Spanneinrichtung (20) ein eigenstabiler, elastischer und thermostabiler Schlauch (22) ist.

3. Stromabnehmer nach Anspruch 1 oder 2, **dadurch gekennzeichnet, dass** das Heizelement (18) als im Wesentlichen starrer Stab (28) ausgebildet ist und zwei freie Enden (30, 32) aufweist.

4. Stromabnehmer nach Anspruch 3, **dadurch gekennzeichnet, dass** der eigenstabile elastische Schlauch (22) entlang des stabförmigen Heizelements (18) angeordnet ist und dass der Schlauch (22) wenigstens mit einem freien Ende (30) des Heizelements (18) fest verbunden ist.

5. Stromabnehmer nach einem der vorangehenden Ansprüche 2 bis 4, **dadurch gekennzeichnet, dass** der Schlauch (22) an einem Ende (24) abgedichtet ist und dass dieses abgedichtete Ende (24) des Schlauchs (22) mit einem der freien Enden (30, 32) des stabförmigen Heizelements (18) verbunden ist.

6. Stromabnehmer nach einem der vorangehenden Ansprüche, **dadurch gekennzeichnet, dass** die Bohrung (14) in der Schleifkontaktschiene (10) so dicht unter der der Leitung (4) zuwendbaren Oberfläche der Schleifkontaktschiene (10) ausgeführt ist, dass ein in Umfangsrichtung begrenzter Abschnitt der Bohrung (14) in der der Leitung (4) zuwendbaren Oberfläche einen Schlitz (60) ausgebildet ist.

7. Stromabnehmer nach Anspruch 6, **dadurch gekennzeichnet, dass** der Schlitz (60) eine Schlitzbreite (B60) hat, dass die Schlitzbreite (B60) kleiner als der Durchmesser des Heizelements (18) gewählt ist.

8. Stromabnehmer nach Anspruch 7, **dadurch gekennzeichnet, dass** die Spanneinrichtung (20) in der Bohrung (14) an der dem Schlitz (60) gegenüberliegenden Seite des Heizelements (18) angeordnet ist und das Heizelement (18) in Richtung des Schlitzes (18) drückt.

9. Heizeinrichtung (12) für einen beheizbaren Stromabnehmer (2) nach einem der vorhergehenden Ansprüche, mit
einem im Wesentlichen starren stabförmigen Heizelement (18) mit einem elektrischen Widerstandsheizleiter (36) und zwei freien Enden (30, 32),
**gekennzeichnet durch**
einen eigenstabilen, elastischen und thermostabilen Schlauch (22), der an einem Ende (24) abgedichtet ist,
wobei das abgedichtete Ende (24) des Schlauches (22) mit einem (30) der freien Enden des Heizelements (18) fest verbunden ist.

10. Heizeinrichtung nach Anspruch 9, **dadurch gekennzeichnet, dass** das Heizelement (18) einen Stab (28), insbesondere einen Teflonstab, mit einem Außengewinde (34) umfasst, und dass der elektrische Widerstandsheizleiter (36) in den Rillen des Außengewindes (34) eingelegt ist.

11. Heizeinrichtung nach Anspruch 10, **dadurch gekennzeichnet, dass** die Außenseite des Stabes (28) mit dem elektrischen Widerstandsheizleiter (36) mit einer elektrisch isolierenden und wärmedurchlässigen Schicht (48) versehen ist.

12. Heizeinrichtung nach Anspruch 11, **dadurch gekennzeichnet, dass** die elektrisch isolierende und wärmedurchlässige Schicht (48) wenigstens einen Schrumpfschlauch (50) umfasst.

13. Beheizbarer Stromabnehmer (2) zum Herstellen eines elektrischen Kontakts zwischen einer stromführenden Leitung (4) und einem Elektrofahrzeug (6), mit wenigstens einer im Wesentlichen quer zur stromführenden Leitung (4) angeordneten Schleifkontaktschiene (10), und
einem Hebemechanismus (8), an dem die wenigstens eine Schleifkontaktschiene (10) montiert ist,
wobei die wenigstens eine Schleifkontaktschiene (10) wenigstens eine Bohrung (14) aufweist, in der jeweils eine elektrisch betriebene Heizeinrichtung (12) angeordnet ist, die nur einen Teil des Querschnitts der Bohrung (14) ausfüllt,
**gekennzeichnet durch** eine Heizeinrichtung (12) nach einem der Ansprüche 8 bis 12.
